# EUROPEAN PATENT SPECIFICATION

(11) **EP 0 520 415 B1**
(45) Date of publication and mention of the grant of the patent: **23.08.1995**
(21) Application number: 92110654.8
(22) Date of filing: 24.06.1992
(51) Int. Cl.: G01W 1/14

(54) **First stage rainfall sampler**
Sammler für Regenproben der ersten Regenphase
Pluviomètre pour prélever des échantillons de la première pluie

(30) Priority: 25.06.1991 JP 181837/91
(43) Date of publication of application: 30.12.1992
(73) Proprietor: KAWANAMI, Shigeharu, Kyoto (JP); HORIBA, LTD., Minami-ku Kyoto (JP)
(72) Inventor: Kawanami, Shigeharu, Ukyo-ku, Kyoto (JP); Nagai, Hiroshi, Kyoto (JP)
(74) Representative: TER MEER STEINMEISTER & PARTNER GbR

(56) References cited:
- US-A- 1 813 834
- US-A- 3 127 769
- US-A- 3 958 457
- US-A- 3 978 723
- REVIEW OF SCIENTIFIC INSTRUMENTS, vol. 45, no. 12, 12 December 1974, New York, US, pages 1517-1519, K.D. Hage, H.W. Mary: "An automatic sequential rainfall sampler"
- DATABASE WPIL, Week 8322, Derwent Publications Ltd., London, GB; AN 83-H4007K & SU-A-945838

## Description

The present invention relates to a first stage rainfall sampler as described in the preamble of claim 1.

Such kind of rainfall sampler is already known from Review of Scientific Instruments, Vol. 45, No. 12, 12 December 1974, New York, pages 1517 - 1519, J. Gray et al.: "An automatic sequential rainfall sampler". This known rainfall sampler contains a rainfall receiver provided on a closable housing having an outlet port penetrating into said housing, and further a first support member provided in said housing and rotatably mounted on a shaft supported by a second support member, said first support member including a plurality of sampling containers detachably mounted at intervals on the circumference of said first support members such that the sampling containers pass sequentially beneath the outlet port of the rainfall receiver.

From Derwent Abstract of SU-A-945 838, Derwent Publications Ltd., London, an automatic precipitation sampler is already known comprising a collecting funnel and a distributing collector which communicates through orifices with protective dispensers for receptacles, and which has greater immunity to general and cross pollution of atmospheric precipitation samples. It can be used as hydro-meteorological instrumentation for isotropic and chemical analysis of the samples.

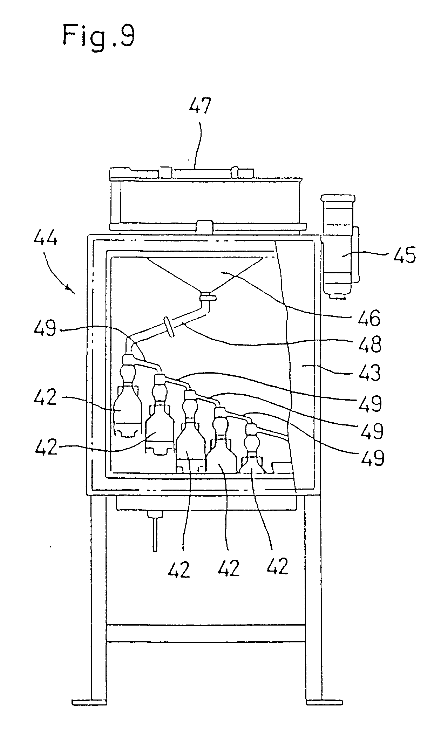

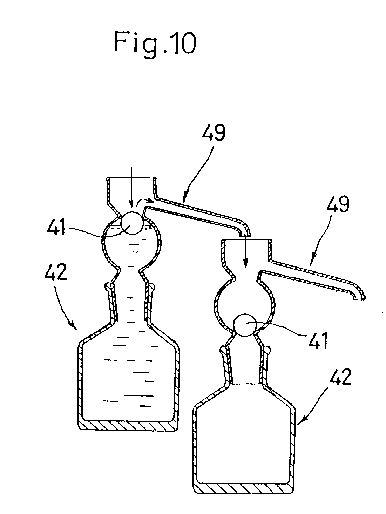

In case a rainfall is sampled for every 1 mm in a first stage step by step, a water-sampling bottle 42 provided with a float stopper 41, as shown in for example Fig 10, has been used. Further a sampler 44, in which a plurality of said water-sampling bottles 42 are arranged in a housing portion 43 step by step, as shown in Fig. 9, has been used. In this sampler 44, when said rainfall is detected by a rain sensor 45, a cover member 47 covering a funnel 46 provided in an upper portion of said housing portion 43 is opened to introduce said rainfall at first into the water-sampling bottle 42, which is uppermost arranged, through a conduit 48, and, when the water-sampling bottle 42 is filled with the rainfall, the water-sampling bottle 42 is closed by said float stopper 41 and then the rainfall is introduced into the next water-sampling bottle 42 by a distributing funnel 49. Subsequently, the rainfall is introduced into the respective following water-sampling bottles 42 in turn step by step.

In the above described sampling method by the use of the water-sampling bottle 42, difficult points have occurred in that the water-sampling bottle 42 is provided with the float stopper 41 and thus complicated in construction, so that it is not easy to wash the water-sampling bottle 42, and the water-sampling bottle 42 is fixed in volume, so that, in the case where the first stage rainfall is sampled more finely, for example for every 0.5 mm, the water sampling bottle 42 or said funnel 46 must be exchanged. In addition, in the case where the first stage rainfall is sampled for every 6 mm or more, the sampler 44 itself is considerably increased in size and weight and thus a high and wide space is required, so that for example a selection of an installation site, an installation work or transfer and the like are not easy. Furthermore, said cover member 47 of the funnel 46 is adapted to be automatically opened and closed by a motor, so that a difficult point has occurred also in that for example a power source is required.

### SUMMARY OF THE INVENTION

The present invention has been achieved taking the above described circumstances into consideration and it is an object of the present invention to inexpensively provide a handy first stage rainfall sampler capable of automatically sampling a first stage rainfall step by step without requiring a motive power, easy to install and transfer, and easy to wash sampling containers.

In order to achieve the above described object the present invention is characterized in that the first support member is removable from said housing and rotatable in a vertical plane when positioned in said housing, in that the sampling containers are swingably mounted on the first support member, and in that the first support member is provided with a weight which provides a mechanical equilibrium between the first support member and the sampled rainfall.

When a rainfall is collected by said rainfall receiver provided on the housing to be poured into a first sampling container drop by drop through the outlet port, a balance between said weight and the tumbler is changed depending upon a quantity of rainfall poured into said first sampling contained drop by drop to revolve the tumbler little by little and the next sampling container corresponds to the outlet port to sample said rainfall similarly. Said balance condition between the weight and the tumbler is further changed depending upon said quantity of rainfall poured into the next sampling container drop by drop and the further subsequent sampling container corresponds to the outlet port. Subsequently, the balance condition between the quantity of rainfall sampled in the sampling container and the weight is variably changed in turn, whereby an appointed quantity of rainfall is automatically sampled in the respective sampling containers. In short, the rainfall can be automatically sampled step by step without requiring a motive power by the change of balance between the sampled rainfall anti the weight in weight.

Such the sampler can be reduced in weight and compact by making it from for example transparent acrylic resin materials and inexpensively provided in the form of an easily carriable and handy one. In addition, the construction that the respective sampling containers are detachably hung down from the first support member is simple, so that, if the first support member is taken out of the housing to remove the respective sampling containers, the washing and the like can be easily conducted.

### BRIEF DESCRIPTION OF THE DRAWINGS

Fig. 1 is a longitudinally sectioned front view showing one preferred embodiment of a first stage rainfall sampler according to the present invention;
Fig. 2 is a longitudinally sectioned side view showing said first stage rainfall sampler;
Fig. 3 is a partial sectional view showing the first stage rainfall sampler;
Fig. 4 is a d sintegrated perspective view showing essential parts in the first stage rainfall sampler;
Fig. 5 is an operation diagram showing a first stage condition of the first stage rainfall sampler;
Fig. 6 is an operation diagram showing a final stage of the first stage rainfall sampler;
Fig. 7 is a perspective view showing essential parts in the first stage rainfall sampler according to another preferred embodiment;
Fig. 8 is the entire drawing showing the first stage rainfall sampler;
Fig. 9 is a partially fractured front view showing one example of the conventional sampler; and
Fig. 10 is a sectional view showing a sampling bottle.

### DETAILED DESCRIPTION OF THE PREFERRED EMBODIMENTS

The present invention will be below described with reference to the preferred embodiments thereof.

A first stage rainfall sampler in the present preferred embodiment samples every about several milliliters of first stage rainfall 7 in divided 7 stages and has the following construction.

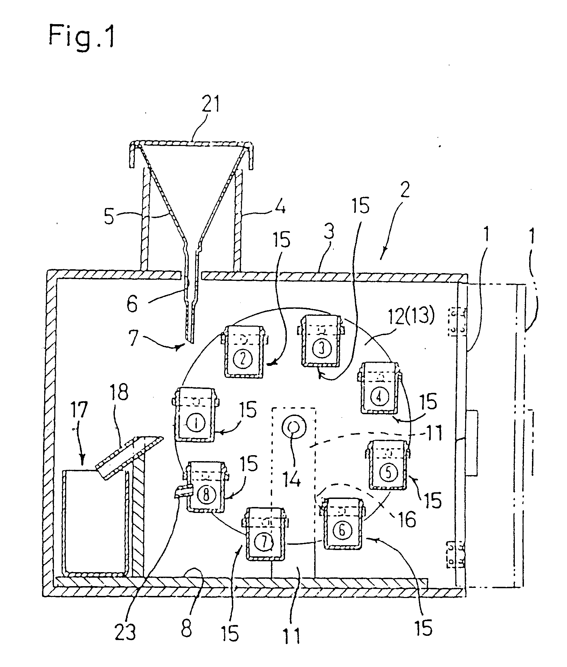

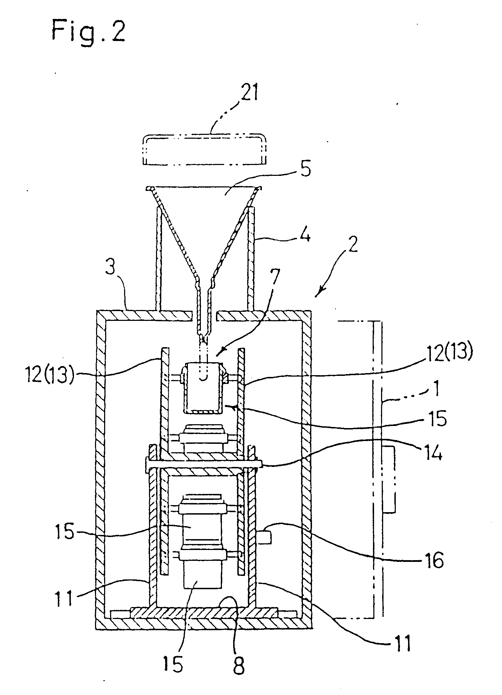

As shown in Figs. 1 to 3, a transparent box-shaped housing 2 having a one-side opening door 1 on one side thereof is provided with a cylindrical funnel-receiving member 4 fixedly mounted on a ceiling portion 3 thereof, a funnel [rainfall receiver) 5 having a diameter of 8 cm being placed on said cylindrical funnel-receiving member 4, and a pointed end portion of said funnel 5 passing through a funnel hole 6 formed in said ceiling portion 3 so that an outlet port 7 may downward face to an upper portion within said housing 2. A first support member 13 consisting of a pair of disks 12, 12 revolvably supported by a pair of second support members (support plates) 11, 11 standing on a bed plate 8, which can be taken out and in the housing 2, in a vertical plane is housed in the housing 2 d 8 sets of cylindrical bottomed sampling container 15 being swingably and detachably provided between both disks 12, 12 on the same one circumference at regular intervals. One of said disks 12 being provided with a cylindrical weight fixedly projected outward on an outer side thereof.

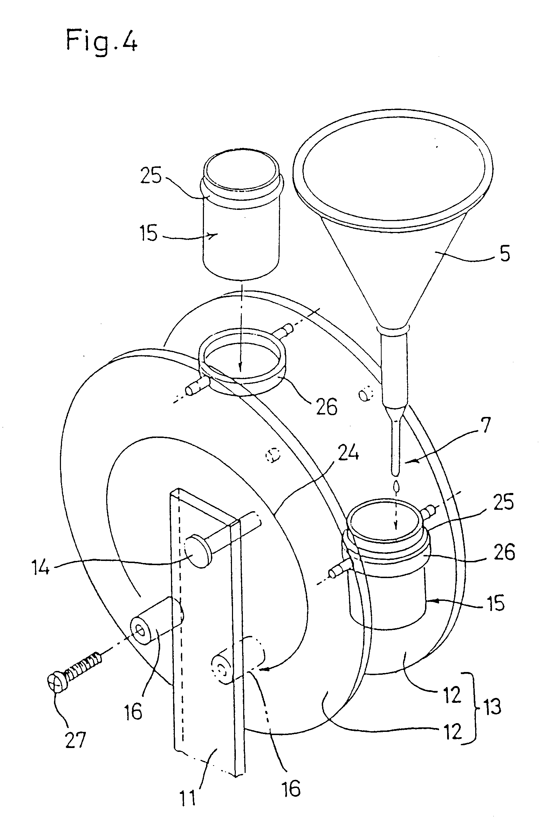

With such the construction, in a first stage, as shown in Fig. 1, a first sampling container 15 (①) corresponds to a position immediately under said outlet port 7 of the funnel 5 and a weight 16 is engaged with one side of one support plate 11 with a support shaft 14 of both disks 12, 12 put between said weight 16 and said sampling container 15 (①). Although the weight 16 serves also as a first stage position-determining mechanism in said first stage in this preferred embodiment, a first stage position-determining stopper may be provided separately from the weight 16. When it likely to rain, if the funnel 5 is placed with removing a cover 21, the rainfall is collected by the funnel 5 when it rains, and, the rainfall is first poured into the first sampling container 15 (①) drop by drop through the outlet port 7. And, when the rainfall is sampled in the first sampling container 15 (①) and a moment of rotation by the rainfall sampled in the first sampling container 15 (①) becomes larger than that acting upon the support plate 11 from the weight 16, a balance between the weight 16 and the rainfall sampled in the first sampling container 15 (①) ill weight is changed to start a revolution of the disks 12, 12 in the direction shown by an arrow 24 in Fig. 4 (counterclockwise direction in Fig. 1). When the rainfall is gradually accumulated in the first sampling container 15 (①) to gradually descend the sampling container 15 (①), a second sampling container 15 (②) corresponds to the outlet port 7 of the funnel 5 to start a sampling of rainfall similarly. During that time, the weight 16 is separated from one end of the support plate 11 to be risen with forming a balanced condiciton between the rainfall sampled momentarily and it. And, when an appointed quantity of rainfall is sampled in said second sampling container 15 (②), a third sampling container 15 (③) corresponds to the outlet port 7. Subsequently, an almost equal quantity of rainfall is sampled in said third sampling container 15 (③) and the following sampling containers 15 until a seventh sampling container 15 (⑦) in turn similarly. In addition, the first sampling container 15 (①) does not move during a short time when the weight 16 is engaged with the support plate 11, as above described, so that there is a tendency that the quantity of rainfall sampled in the first sampling container 15 (①) is larger than that sampled in the second to seventh sampling containers, respectively, but this tendency can be reduced by for example regulating a position of a bed plate 8 or adding the weight to regulate the first sampling container 15 (①) in weight.

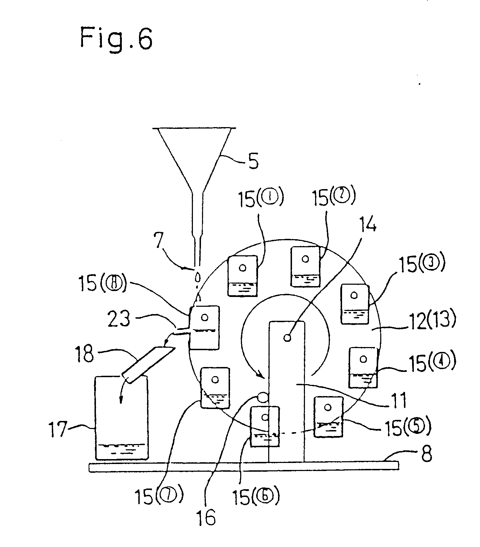

When said appointed quantity of rainfall is sampled in the seventh sampling container 15 (⑦) and the following eighth sampling container 15 (⑧) corresponds to the outlet port 7 of the funnel 5, the weight 16 is engaged with the other side of the support plate 11 to stop the disks 12, 12. At this time, said eighth sampling container 15 (⑧) is arranged immediately below the outlet port 7 and a pointed end of an exhaust pipe 23 mounted outward on the eighth sampling container 15 (⑧) faces to one end of a pipe 18 for introducing the rainfall into an overflow container 17 on the bed plate 8 (refer to Fig. 6). Thus, when the quantity of rainfall sampled in the eighth sampling container 15 (⑧) exceeds the appointed value, the rainfall is overflown to be collected in a beaker 17 on the bed plate 8, whereby the whole residual rainfall can be sampled separately from the first stage rainfall. In addition, although the weight 16 serves also as a stopper for determining a position where the revolution is completed in this preferred embodiment, said stopper for determining said position where the revolution is completed may be provided separately from the weight 16.

As above described, the almost equal quantity of rainfall can be sampled step by step in the first to seventh sampling containers 15, respectively. If the sampling operation is over, the disks 12, 12 are taken out of the housing 2 together with the bed plate 8 and the respective sampling containers 15 are removed from the disks 12, 12 so as to be used for other purposes such as measurements of pH-value and electric conductivity. In addition, the sampling containers 15 are simple in construction, so that they are easily washed.

Such the sampler can be formed with reduced weight and compact by using transparent acrylic resins and the like for almost all main members, so that it can be easily installed and handled even by a beginner. Furthermore, it can be inexpensively provided, so that it is expected that it is used in many fields.

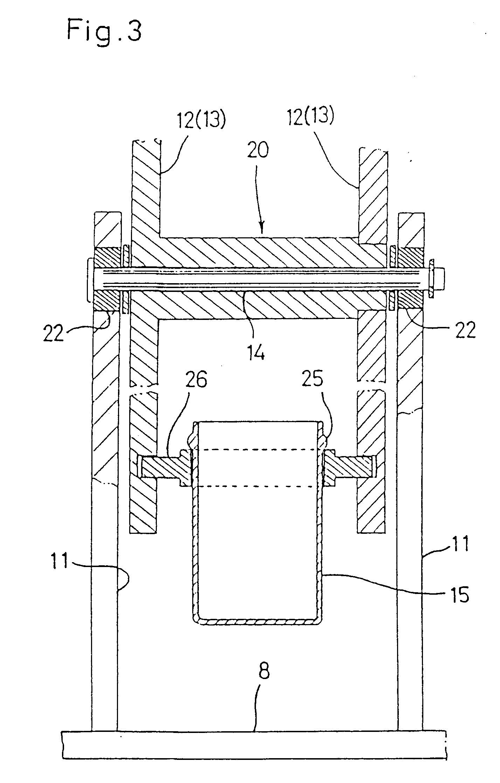

In more detail a pair of disks 12, 12 are integrally engaged with each other at a central portion 20 thereof (refer to Fig. 3) and a metallic support shaft 14 fixedly passing through said central portion 20 is pivoted on resinous bearing members 22, 22 called a roulon put on upper portions of the support plates 11, 11 standing on the bed plate 8 with a reduced friction factor, whereby a subtle balanced condition can be formed. However, such the consideration is not always specially required in the case where the whole weight is reduced by for example using merely one disk 12, as disclosed in a preferred embodiment which will be mentioned later.

The sampling containers 15 for sampling the rainfall are formed in the form of bottomed cylinder simple in construction and hung dowm between both disks 12, 12 so as to be swingable within a plane parallel to both disks 12, 12 and detachable by engaging a circumferential projected member 25 formed on an upper outer circumference thereof with a circular receiving member 26 pivoted between both disks 12, 12 (refer to Fig. 4). In short, the sampling containers 15 can be put on said receiving member 26 from the upper part to be simply installed and always held in an almost vertical posture under the condition that they are hung down by means of the receiving member 26 (refer to Fig. 1). Accordingly, when the sampling containers 15 are to be removed, it is sufficient to draw them up as they are That is to say, they have a remarkably handy construction. Furthermore, although the sampling containers 15 on the market are used in this preferred embodiment, sampling containers having cut ends on both sides and sampling containers with an expanded mouth so as to smoothly sample from one to the following one, as disclosed in the preferred embodiments which will be mentioned later, also can be used.

The weight 16 for balancing between the sampled rainfall and the disks 12, 12 in weight is formed in the form of cylinder and fixedly screwed up on an outer side of one disk 12 by means of a bolt 24 (refer to Fig. 4) and it is engaged with one side of the support plate 11 to be balanced under the first stage condition before the rainfall is sampled, as shown by a broken line in Fig. 1 and a full line in Fig. 4, and, at this time, the first sampling container 15 (①) corresponds to a position immediately below the outlet port 7 of the funnel 5. And, when the weight 16 is revolved in the direction separating from one side of the support plate 11 to be engaged with the other side of the support plate 11, the disks 12, 12 are stopped, and, at this time, the eighth sampling container 15 (⑧) corresponds to said position immediately below the outlet port 7 to complete the sampling operation (refer to Fig. 6). In short, the weight 16 functions as a stopper not only variably forming a balanced condition between the first support member and the rainfall sampled with changing its position by a revolution of the disks 12, 12 to automatically achieve the sampling operation but also sets a first stage position and a final position of the sampling container 15. In addition, as above described, also a stopper for setting said first stage position of the sampling container 15 and a stopper for setting said final position of the sampling container 15 may be provided separately from the weight 16.

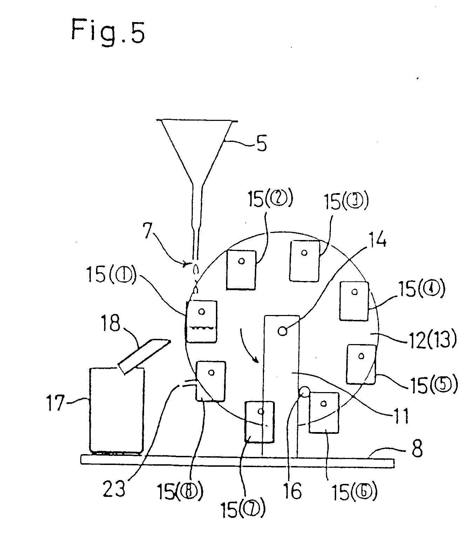

This process of variably forming said balanced condition by the weight 16 will be below described in due order again with reference to Figs. 5, 6. At first, under the first stage condition, the weight 16 is engaged with one side surface of the support plate 11 under the condition that the disks 12, 12 are energized clockwise by a weight of the weight 16.

And, as the rainfall is poured drop by drop into the first sampling container 15 (①) from the funnel 5 to be sampled, the disks 12, 12 are revolved counterclockwise little by little to be balanced with the weight 16, of which horizontal arm for said support shaft 14 has been increased in length, whereby at last the second sampling container 15 (②) corresponds to the position immediately below the outlet port 7 of the funnel 5. Subsequently, said horizontal arm for the support shaft 14 of the weight 16 is similarly increased in length for the sampled rainfall to form the balanced condition until a time when the rainfall is sampled in the third sampling container 15 (③).

When the rainfall starts to be poured into a fourth sampling container 15 (④), the first container 15 (①) is positioned on the right side of the support shaft 14, so that the rainfall within the first sampling container 15 (①) and the weight 16 are balanced with the rainfalls within three sampling containers 15 (④, ③, ②).

In a stage of sampling the rainfall in a fifth sampling container 15 (⑤), the weight 16 is positioned on the left side of the support shaft 14, so that the weight 16 and the rainfalls within three sampling containers 15 (⑤, ④, ③) are balanced with the rainfalls within two sampling containers 15 (①, ②). Subsequently, the balanced condition is similarly formed variably between the weight 16 and the sampled rainfalls on the right and left sides of the support shaft 14 until the eighth sampling container 15 (⑧) (refer to Fig. 6) to automatically continue the sampling operation.

By the way, if the present sampler was used to sample the rainfall, 3.4, 3.3, 3.5, 3.3, 3.5, 3.5 and 3.3 ml of rainfall could be sampled in the first to seventh sampling container 15, respectively.

In addition, a quantity (ml) of rainfall to be sampled as the rainfall fraction of 1 mm is determined by a diameter of the funnel 5 and a quantity of rainfall to be sampled is determined by said weight of the weight 16, so that the first stage rainfall is more finely sampled in the case where said diameter of the funnel 5 is larger but the weight of the weight 16 is smaller as compared with the case where the diameter of the funnel 5 is smaller but the weight of the weight 16 is larger. In addition, in order to increase said quantity of rainfall to be sampled at same sampling widths, it is sufficient to increase the diameter of the funnel 5 and the weight of the weight 16.

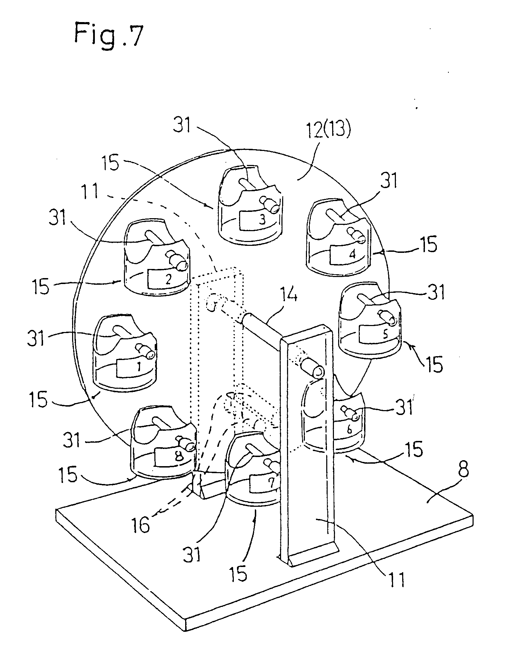

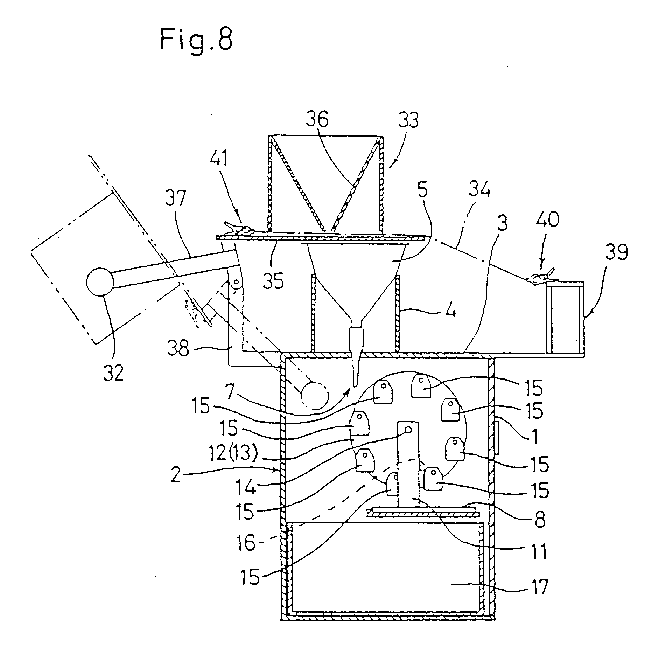

Figs. 7, 8 show another preferred embodiment in which the sampler is still more simplified in construction and a cover for preventing dry sediments and the like from sticking to the funnel cart be automatically opened without requiring a motive power. That is to say, said first support member 13 carrying the respective hanging down sampling containers 15 is made from a piece of disk 12, support shafts 31 being fixed at regular intervals on the same one circumference of the disk 12, the respective support shafts 31 being inserted into shaft holes formed in an upper part of the sampling container 15 (Refer to Fig. 7), a cover 33, which is opened by a weight 32, being provided in an upper part of a housing 2, and said cover 33 being placed on a funnel 5 by a tension of a toilet paper 34. Said toilet paper 34 may be broken when it rains to remove the cover 33 and thus open an upper part of said funnel 5 (refer to Fig. 8). In addition, two pieces of weight 16 are mounted on said disk 12 so that the respective weights 16 may separately serve also as a stopper for setting the first stage position and a stopper for setting the final position.

The above described cover 33 comprises a flat plate 35 and a funnel-shaped raindrop-collector 36 mounted on said flat plate 35, the flat plate 35 being provided with a support member 37 extending outward fixedly mounted in a lower part of one end thereof, said support member 37 being provided with said weight 32 mounted on a pointed end thereof, and the support member 37 being pivoted on an upper end of a L letter-shaped support member 38 bent from one upper end of said housing 2 and extended upward at a base thereof. And, a support member 39 extended outward is mounted on the other upper end of the housing 2 so that the cover 33 may close the funnel 5, as shown by a full line, by said tension of the toilet paper 34 extended over a clip 40 fixedly mounted on said support member 39 and a clip 41 fixedly mounted on one end of the flat plate 35. The toilet paper 34 is extended immediately below said raindrop-collector 36 on the flat paper 35, so that, if it rains, the toilet paper 34 is broken soon, whereby the cover 33 is immediately fallen down by a weight of the weight 32 at a position shown by a two-dot chain line to open the funnel 5.

In addition, in this preferred embodiment, said pipe 18 and said exhaust pipe 23 shown in Fig. 1 are not used and the rainfall overflown from the eighth sampling container 15 (⑧) is directly fallen drop by drop into an overflowing container 17 arranged in a lower part of the housing 2. Although it is riot shown, it is better to hang a thread from an outside notched portion of the eighth sampling container 15 (⑧) or mount a thread-like member made of papers and plastics and the like there in order to smoothly fall the rainfall drop by drop.

Furthermore, in both preferred embodiments shown in Figs. 1, 8, it is important to determine the position of the outlet port 7 of the funnel 5, so that it is still more preferable that a magic tape and the like are stuck to for example said funnel hole 6 and the funnel 5 in the ceiling portion 3 of the housing 2 so as to determine the position of the outlet port 7 of the funnel 5.

As above described, with the first stage rainfall sampler according to the present invention, the variable balanced condition is formed between the rainfall sampled by the sampling containers detachably mounted on the first support member and the weight mounted on the first support member, so that the rainfall can be automatically sampled step by step without requiring a motive power and the sampling containers can be easily washed to be remarkably handy. In addition, the sampler is simple in construction, so that it can be inexpensively provided.

Besides, the present invention is not limited by the tumbler detachably hanging the sampling containers disclosed in the preferred embodiments. The first support member may be formed of a support member radially extending from a support shaft or a circular member may be supported by a support shaft through a rib.

In addition, the detachable supporting construction of the sampling containers is not limited by the preferred embodiments. A circular receiving member may be partially notched.

## Claims

1. A first stage rainfall sampler, with a rainfall receiver (5) provided on a closable housing having an outlet port (7) penetrating into said housing (2), and with a first support member (13) provided in said housing (2) and rotatably mounted on a shaft (14) supported by a second support member (11), said first support member (13) including a plurality of sampling containers (15) detachably mounted at intervals on the circumference of said first support member (13) such that the sampling containers (15) pass sequentially beneath the outlet port (7) of the rainfall receiver (5),
characterised in that
the first support member (13) is removable from said housing and rotatable in a vertical plane when positioned in said housing, in that the sampling containers (15) are swingably mounted on the first support member (13), and in that the first support member (13) is provided with a weight (16) which provides a mechanical equilibrium between the first support member (13) and the sampled rainfall.

2. The rainfall sampler as claimed in claim 1, characterised in that the weight (16) is mounted on the first support member (13) such that in a first stage position the sampling container to be filled at first is positioned higher than the support shaft (14) of the first support member (13).

3. The rainfall sampler as claimed in claim 2, characterised in that a stopper (16) is in contact with one side of the second support member (11) in the first stage position when the sampling container (15) to be filled at first is in its home or starting position.

4. The rainfall sampler as claimed in claim 3, characterised in that the filling position of the sampling container (15) to be filled as the last one is determined by a stopper (16) being in contact with the other side of said second support member (11).

5. The rainfall sampler as claimed in claim 3 or 4, characterised in that the stoppers are formed by said weight (16).

6. The rainfall sampler as claimed in claim 5, characterised in that the sampling container (15) to be filled as the last one is provided with an outlet port (23) which is above an inlet port of a pipe (18) connected to an overflow container (17) when the stopper (16) is in contact with said other side of the second support member (11).

7. The rainfall sampler as claimed in one of the claims 1 to 6, characterised in that the second support member (11) is mounted on a bed plate (8) the position of which can be regulated to compensate the tendency that the quantity of rainfall sampled in the first sampling container (15) is larger than the quantity of rainfall sampled in the other sampling containers (15).

8. The rainfall sampler as claimed in one of the claims 1 to 6, characterised in that the sampling container (15) to be filled at first has a higher weight than the remaining sampling containers (15).

9. The rainfall sampler as claimed in one of the claims 1 to 8, characterised in that the first support member (13) consists of a pair of disks (12) rotatably supported by a pair of second support members (11), and in that the sampling containers (15) are swingably and detachably mounted between the two disks (12).

10. The rainfall sampler as claimed in one of the claims 1 to 8, characterised in that the first support member (13) consists of one single disk (12) rotatably supported by a second support member (11), and in that the sampling containers (15) are swingably and detachably mounted on said disk (12).

11. The rainfall sampler as claimed in one of the claims 1 to 10, characterised by a cover (33) which is removed from an inlet port of the rainfall receiver (5) by a weight (32) if a paper (34) stressed between said weight (32) and a support member (39) and positioned above said cover (33) is broken by rain water.

12. The rainfall sampler as claimed in claim 11, characterised in that the cover (33) comprises a funnel-shaped raindrop collector (36).

## Patentansprüche

1. Sammler für Regenproben der ersten Regenphase mit einem Regenwasseraufnehmer (5), der an einem verschließbaren Gehäuse vorhanden ist und einen in das Gehäuse (2) eindringenden Auslaßstutzen (7) aufweist, und mit einem im Gehäuse (2) vorhandenen ersten Halteteil (13), das drehbar an einer Achse (14) angebracht ist, die durch ein zweites Halteteil (11) gehalten wird, wobei das erste Halteteil (13) mehrere Probennahmebehälter (15) beinhaltet, die mit Intervallen am Umfang des ersten Halteteils (13) wegnehmbar so angebracht sind, daß diese Probennahmebehälter (15) der Reihe nach unter dem Auslaßstutzen (7) des Regenwasseraufnehmers (5) durchlaufen;
**dadurch gekennzeichnet,** daß
das erste Halteteil (13) vom Gehäuse wegnehmbar ist und in einer vertikalen Ebene verdrehbar ist, wenn es im Gehäuse untergebracht ist, daß die Probennahmebehälter (15) verschwenkbar am ersten Halteteil (13) angebracht sind und daß das erste Halteteil (13) mit einem Gewicht (16) versehen ist, das für ein mechanisches Gleichgewicht zwischen dem ersten Halteteil (13) und dem als Probe genommenen Regenwasser sorgt.

2. Sammler für Regenwasser nach Anspruch 1, **dadurch gekennzeichnet,** daß das Gewicht (16) so am ersten Halteteil (13) angebracht ist, daß der als erster zu füllende Probennahmebehälter in einer Position in einem ersten Stadium höher als die Halteachse (14) des ersten Halteteils (13) liegt.

3. Sammler für Regenproben nach Anspruch 2, **dadurch gekennzeichnet,** daß ein Anschlag (16) in der Position im ersten Stadium in Kontakt mit einer Seite des zweiten Halteteils (11) steht, wenn sich der als erster zu füllende Probennahmebehälter (15) in seiner Ausgangs- oder Startposition befindet.

4. Sammler für Regenproben nach Anspruch 3, **dadurch gekennzeichnet,** daß die Füllposition des als letzter zu füllenden Probennahmebehälters (15) durch einen Anschlag (16) festgelegt wird, der in Kontakt mit der anderen Seite des zweiten Halteteils (11) steht.

5. Sammler für Regenproben nach einem der Ansprüche 3 oder 4, **dadurch gekennzeichnet,** daß die Anschläge durch das Gewicht (16) gebildet werden.

6. Sammler für Regenproben nach Anspruch 5, **dadurch gekennzeichnet,** daß der als letzter zu füllende Probennahmebehälter (15) mit einem Auslaßstutzen (23) versehen ist, der über einem Einlaßstutzen eines Rohrs (18) liegt, das mit einem Überlaufbehälter (17) verbunden ist, und zwar dann, wenn der Anschlag (16) in Kontakt mit der anderen Seite des zweiten Halteteils (11) steht.

7. Sammler für Regenproben nach einem der Ansprüche 1 bis 6, **dadurch gekennzeichnet,** daß das zweite Halteteil (11) auf einer Bettplatte (8) angeordnet ist, deren Position so eingestellt werden kann, daß die Tendenz kompensiert ist, daß die Menge an Regenwasser, das im ersten Probennahmebehälter (15) als Probe genommen wird, größer als die Menge an Regenwasser ist, das in den anderen Probennahmebehältern (15) als Probe genommen wird.

8. Sammler für Regenproben nach einem der Ansprüche 1 bis 6, **dadurch gekennzeichnet,** daß der als erster zu füllende Probennahmebehälter (15) ein größeres Gewicht als die restlichen Probennahmebehälter (15) aufweist.

9. Sammler für Regenproben nach einem der Ansprüche 1 bis 8, **dadurch gekennzeichnet,** daß das erste Halteteil (13) aus einem Paar Scheiben (12), die drehbar durch ein Paar zweiter Halteteile (11) gehalten werden, besteht, und daß die Probennahmebehälter (15) verschwenkbar und wegnehmbar zwischen den zwei Scheiben (12) angebracht sind.

10. Sammler für Regenproben nach einem der Ansprüche 1 bis 8, **dadurch gekennzeichnet,** daß das erste Halteteil (13) aus einer einzelnen Scheibe (12) besteht, die drehbar durch ein zweites Halteteil (11) gehalten wird, und daß die Probennahmebehälter (15) verschwenkbar und wegnehmbar an dieser Scheibe (12) angebracht sind.

11. Sammler für Regenproben nach einem der Ansprüche 1 bis 10, **gekennzeichnet durch** einen Deckel (33), der von einem Einlaßstutzen des Regenwasseraufnehmers (5) durch ein Gewicht (32) weggenommen wird, wenn ein Papier (34), das zwischen dem Gewicht (32) und einem Halteteil (39) gespannt ist und über dem Deckel (33) positioniert ist, durch Regenwasser zerrissen wird.

12. Sammler für Regenproben nach Anspruch 11, **dadurch gekennzeichnet,** daß der Deckel (33) einen trichterförmigen Regentropfensammler (36) aufweist.

## Revendications

1. Un dispositif pour prélever des échantillons de la première précipitation, muni d'un collecteur de précipitations (5) disposé sur un logement susceptible d'être fermé et équipé d'un orifice de sortie (7) qui pénètre à l'intérieur dudit logement (2) et d'un premier organe de support (13) disposé à l'intérieur dudit logement (2) et monté à rotation sur un arbre (14) supporté par un deuxième organe de support (11), ledit premier organe de support (13) comprenant une pluralité de récipients de prélèvement d'échantillons (15) montés de façon amovible à des intervalles sur la circonférence dudit premier organe de support (13), de telle façon que les récipients de prélèvement d'échantillons (15) passent séquentiellement en dessous de l'orifice de sortie (7) du collecteur de précipitations (5), caractérisé en ce que le premier organe de support (13) est amovible par rapport audit logement et est rotatif selon un plan vertical lorsqu'il est positionné à l'intérieur dudit logement, en ce que les récipients de prélèvement d'échantillons (15) sont montés pivotants sur le premier organe de support (13) et en ce que le premier organe de support (13) est muni d'un poids (16) assurant un équilibre mécanique entre le premier organe de support (13) et les précipitations collectées à titre d'échantillon.

2. Le dispositif pour prélever des échantillons de précipitations selon la revendication 1, caractérisé en ce que le poids (16) est monté sur le premier organe de support (13), de telle sorte que, dans une position de première étape, le récipient de prélèvement d'échantillons à remplir en premier soit positionné à un niveau supérieur à celui de l'arbre de support (14) du premier organe de support (13).

3. Le dispositif pour prélever des échantillons de précipitations selon la revendication 2, caractérisé en ce qu'une butée (16) est en contact avec l'une des faces du deuxième organe de support (11) dans la position de la première étape quand le premier récipient de prélèvement d'échantillons (15) à remplir en premier se trouve dans sa position initiale ou de départ.

4. Le dispositif pour prélever des échantillons de précipitations selon la revendication 3, caractérisé en ce que la position de remplissage du récipient de prélèvement d'échantillons (15) à remplir en dernier est déterminée par une butée (16) se trouvant en contact avec l'autre face dudit deuxième organe de support (11).

5. Le dispositif pour prélever des échantillons de précipitations selon la revendication 3 ou 4, caractérisé en ce que les butées sont constituées par ledit poids (16).

6. Le dispositif pour prélever des échantillons de précipitations selon la revendication 5, caractérisé en ce que le récipient de prélèvement d'échantillons (15) à remplir en dernier est muni d'un orifice de sortie (23) qui se trouve situé au-dessus d'un orifice d'entrée d'un tube (18) relié à un récipient de débordement (17) quand la butée (16) est en contact avec ladite autre face du deuxième organe de support (11).

7. Le dispositif pour prélever des échantillons de précipitations selon l'une des revendications 1 à 6, caractérisé en ce que le deuxième organe de support (11) est monté sur un socle (8) dont la position peut être réglée afin de compenser la tendance que la quantité de précipitations rassemblée dans le premier récipient de prélèvement d'échantillons (15) soit supérieure à la quantité de précipitations rassemblée dans les autres récipients de prélèvement d'échantillons (15).

8. Le dispositif pour prélever des échantillons de précipitations selon l'une des revendications 1 à 6, caractérisé en ce que le poids du récipient de prélèvement d'échantillons (15) à remplir en premier est supérieur à celui des autres récipients de prélèvement d'échantillons (15).

9. Le dispositif pour prélever des échantillons de précipitations selon l'une des revendications 1 à 8, caractérisé en ce que le premier organe de support (13) se compose d'une paire de disques (12) supportés à rotation par une paire de deuxième organes de support (11), et en ce que les récipients de prélèvement d'échantillons (15) sont montés pivotants et amovibles entre les deux disques (12).

10. Le dispositif pour prélever des échantillons de précipitations selon l'une des revendications 1 à 8, caractérisé en ce que le premier organe de support (13) se compose d'un disque unique (12) supporté à rotation par un deuxième organe de support (11) et en ce que les récipients de prélèvement d'échantillons (15) sont montés pivotants et amovibles sur ledit disque (12).

11. Le dispositif pour prélever des échantillons de précipitations selon l'une des revendications 1 à 10, caractérisé par un couvercle (33) qui est enlevé d'un orifice d'entrée du récipient collecteur de précipitations (5) par un poids (32) si un papier (34,) tendu entre ledit poids (32) et un organe de support (39) et positionné au-dessus dudit couvercle (33), est rompu par l'eau des précipitations.

12. Le dispositif pour prélever des échantillons de précipitations selon la revendication 11, caractérisé en ce que le couvercle (33) comprend un collecteur de gouttes de pluie en forme d'entonnoir (36).
